(19) Europäisches Patentamt / European Patent Office / Office européen des brevets

(11) **EP 4 451 543 A1**

(12) **EUROPEAN PATENT APPLICATION**
published in accordance with Art. 153(4) EPC

(43) Date of publication:
**23.10.2024 Bulletin 2024/43**

(21) Application number: **22923338.2**

(22) Date of filing: **14.10.2022**

(51) International Patent Classification (IPC):
**H02M 7/515** (2007.01)   **H02M 7/64** (2006.01)
**H02P 7/06** (2006.01)

(52) Cooperative Patent Classification (CPC):
Y02B 70/10

(86) International application number:
**PCT/CN2022/125429**

(87) International publication number:
**WO 2023/142538 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  26.01.2022  CN 202210095101
11.10.2022  CN 202211242361

(71) Applicant: **Zhang, Yixing**
**Beijing 100088 (CN)**

(72) Inventor: **Zhang, Yixing**
**Beijing 100088 (CN)**

(74) Representative: **Gille Hrabal**
**Partnerschaftsgesellschaft mbB**
**Patentanwälte**
**Brucknerstraße 20**
**40593 Düsseldorf (DE)**

(54) **INVERTER APPARATUS AND APPLICATION THEREOF**

(57) The present disclosure discloses an inverter apparatus and an application thereof. The inverter apparatus comprises an n-phase bridge inverter circuit (where $n = 2k + 1$, and $k$ is an integer greater than or equal to 2) and n iron cored winding coil combinations; the n-phase bridge inverter circuit is composed of n groups of unidirectional conductive electronic switch devices connected pairwise in series; and there is a definite electromagnetic induction relationship between the iron cored winding coils, so that a given DC power source generates an n-phase AC voltage source at n connection points of the n iron cored winding coil combinations and n series connection points of the n groups of unidirectional conductive electronic switch devices connected pairwise in series, wherein the n-phase AC power source refers to a group of n sine-wave voltage sources that have equal amplitudes and have phases at an interval of 360°/n in sequence. In the present disclosure, a multi-phase bridge inversion method is further used to generate a rotating magnetic field, thereby the working principle of a DC motor is completely abandoned and DC electric driving is realized.

Fig. 1

A = Unidirectional Electronic Switch

EP 4 451 543 A1

**Description**

**Technical Field**

The present disclosure relates to the technical fields of power sources, electric power, motors and electric driving, and the entire electrotechnical field, in particular to multi-phase bridge inversion, direct current (DC) voltage transformation and DC electric driving, and an application thereof.

**Background Art**

Alternating current (AC) and direct current (DC) have their own characteristics. Transformation of power sources between direct current and alternating current is required in electrotechnics, but the transformation problem has not been solved satisfactorily. A rectifier circuit rectifies current with voltage alternating between positive values and negative values into current with unidirectional voltage, but it can't transform the current into flat direct current. Although capacitor filtering can make the voltage flat, high-order harmonics are generated at the AC side and power factor correction must be carried out to eliminate the high-order harmonics of the current, which bring so many problems that it is actually impossible to carry out capacitor filtering in many cases. In fact, it is more complicated to transform direct current into alternating current. Although the electronic switches of an inverter circuit can transform direct current into current with voltage alternating between positive values and negative values, the resultant current is not current with sine wave voltage, and has a lot of high-order harmonics, which bring more problems.

How to directly obtain flat DC voltage and current with a very small ripple factor from AC sine wave voltage and current and how to directly obtain AC voltage and current that have very small high-order harmonics and are close to sine wave from DC voltage and current are problems that must be solved in electrotechnics and seriously hamper the transformation between direct current and alternating current.

**Summary of the Invention**

In order to solve the above problems, in the technical scheme of the present disclosure, an inverter apparatus and an application thereof are proposed, starting from the concept of multi-phase AC power source.

According to a first aspect of the technical scheme of the present disclosure, an inverter apparatus is disclosed. The inverter apparatus comprises an n-phase bridge inverter circuit (where n = 2k + 1, and k is an integer greater than or equal to 2) and n iron cored winding coil combinations;

The n-phase bridge inverter circuit is composed of n groups of unidirectional conductive electronic switch devices connected pairwise in series, including 2n unidirectional conductive electronic switch devices in total, namely:

$$S_1+,S_1-;S_2+,S_2-;S_3+,S_3-; ...$$

$$S_{n-1}+,S_{n-1}-;S_n+,S_n-;$$

Both of the two unidirectional conductive electronic switch devices connected pairwise in series are connected to a positive pole of a DC power source at one end, and connected to a negative pole of the DC power source at the other end; at any time, at most one of the two unidirectional conductive electronic switch devices connected pairwise in series is in an ON state, so that the potential at a series connection point can be either a positive pole potential or a negative pole potential of the DC power source, or can be in a high-impedance state, i.e., when both of the two unidirectional conductive electronic switch devices are in an OFF state, the potential can be any value determined by other factors;

The n iron cored winding coil combinations may employ a star connection mode, i.e., the n iron cored winding coil combinations are connected together at one end, and connected to the connection points of the n unidirectional conductive electronic switch devices connected pairwise in series in the n-phase bridge inverter circuit at the other end; alternatively, the n iron cored winding coil combinations may employ other connection modes, such as a polygonal connection mode, i.e., the n iron cored winding coil combinations are connected end to end in a specific order to form a closed loop, and n connection points of the winding coil combinations in the polygonal connection mode are connected to the series connection points of the n groups of unidirectional conductive electronic switch devices connected pairwise in series in the n-phase bridge inverter circuit;

The 2n unidirectional conductive electronic switch devices perform switching actions according to a pre-determined switching sequence: if the action time of the switches is not taken into account, then, in each action, one switch is closed, while another switch is opened at the same time, to ensure that a pair of switches are always connected; if the action time of the switches is taken into account, then, at any moment, two or three unidirectional conductive electronic switch devices among the 2n unidirectional conductive electronic switch devices are in an ON state, i.e., at a switching moment of the unidirectional conductive electronic switch devices, the unidirectional conductive electronic switch devices that are being switched on and the unidirectional conductive electronic switch devices that are being switched off are in an ON state simultaneously; the switching-on sequence of the unidirectional conductive electronic switch devices may be as follows:

$(S_1+,S_{k+1}-),(S_1+,S_2+,S_{k+1}-)$, $(S_2+,S_{k+1}-)$, $(S_2+,S_{k+1}-,S_{k+2}-)$, $(S_2+,S_{k+2}-)$, $(S_2+,S_3+,S_{k+2}-)$, $(S_3+,S_{k+2}-)$, $(S_3+,S_{k+2}-,S_{k+3}-)$, $(S_3+,S_{k+3}-)$,

... ...

$(S_{2k}+, S_{k-1}-, S_k-)$, $(S_{2k}+, S_k-)$, $(S_{2k}+, S_{2k+1}+, S_k-)$, $(S_{2k+1}+, S_k-)$, $(S_{2k+1}+, S_k-, S_{k+1}-),(S_{2k+1}+, S_{k+1}-)$, $(S_{2k+1}+, S_1+, S_{k+1}-)$,

The cycle is repeated $\rightarrow$ $(S_1+, S_{k+1}-)$ ... ...

There is a definite electromagnetic induction relationship between the iron cored winding coils, so that a given DC power source generates an n-phase AC voltage source at n connection points of the n iron cored winding coil combinations and n series connection points of the n groups of unidirectional conductive electronic switch devices connected pairwise in series in the n-phase bridge inverter circuit, or generates n n-phase step wave AC voltage sources that approximate the n-phase AC power source;

The n-phase AC power source refers to a group of n sine-wave voltage sources that have equal amplitudes and have phases at an interval of 360°/n in sequence; the n-phase step wave AC power source refers to a group of n step wave AC voltage sources that have equal amplitudes and have fundamental wave phases at an interval of 360°/n in sequence.

Here, the concept of multi-phase AC power source is the core and starting point of this patent technology. The n-phase AC power source refers to a group of n sine-wave voltage sources that have equal amplitudes and have phases at an interval of 360°/n in sequence.

Here, let's start with the situation of rectification:

The output DC voltage of a three-phase bridge rectifier is the potential difference between an upper envelope and a lower envelope of the three-phase AC voltage. Obviously, the values of the upper envelope and the lower envelope should be near extreme values. Since the rate of change of any continuous differentiable function at an extreme value is zero, it is not difficult to imagine that the upper and lower envelopes will quickly become flat as the number of phases is increased, so that the ripple factor of the DC voltage output of a multi-phase bridge rectifier is decreased rapidly. Calculations prove that the ripple factor of the output DC voltage of a multi-phase bridge rectifier will be approximately inversely proportional to the square of the number of phases and will decrease more rapidly when the number of phases of the multi-phase AC power source is large enough and is an odd number. For example, for a 9-phase bridge rectifier circuit, since Sin80° = Sin100° = 0.984819, the output DC pulsating voltage will vary between the extreme value and 0.984819 * the extreme value, and its ripple factor will be smaller than 1%. With such a small ripple factor, there is no need for filtering.

The situation of a multi-phase bridge inverter is similar: A multi-phase bridge inverter circuit can be formed simply by replacing the diodes of a multi-phase bridge rectifier circuit with switch devices, ensuring that only the phase having the highest voltage among the phases of the multi-phase AC power source is connected to a positive voltage slightly higher than the maximum value, and ensuring that only the phase having the lowest voltage among the phases of the multi-phase AC power source is connected to a negative voltage slightly lower than the minimum value, thereby a multi-phase AC power source can be generated from a DC power source.

Here, in rectification, the DC power source routed through the multi-phase bridge rectifier circuit is only electrically related with the flat upper and lower envelope voltages of the multi-phase AC power source, and only a very small ripple factor (e.g., smaller than 1%) has to be dealt with for AC-DC transformation, and the three-phase AC current at the AC side is a step wave that is very close to a sine wave; on the other hand, the situation of DC-AC inversion is similar. The DC side and the AC side are directly connected through the multi-phase inverter circuit, the DC power source is only electrically related with the flat upper and lower envelope voltages of the multi-phase AC power source, and only a very small deviation has to be dealt with. The problem can be solved perfectly if the DC side is connected with a small inductor and a smaller capacitor.

The multi-phase AC power source can be obtained from the 3-phase winding combinations of the three-phase AC transformer.

Since

$$SinαSinωt+Sin(α+120°)Sin(ωt+120°)$$

$$+Sin(α+240°)Sin(ωt+240°)$$

$$=(1/2) * [cos(ωt-α)-cos(ωt+α)$$

$$+cos(ωt-α)-cos(ωt+α+240°)$$

$$+cos(ωt-α)-cos(ωt+α+480°)]$$

$$=(3/2) * cos(ωt-α);$$

and

$$[cos(ωt+α)+cos(ωt+α+240°)+cos(ωt+α+480°)]=0;$$

Then

$$cos(ωt-α)=(2/3)*[Sinα\ Sinωt+Sin(α+120°)\ Sin(ωt+120°)$$

$$+Sin(α+240°)\ Sin(ωt+240°)].$$

$$U_m cos(ωt-α) = (2/3) * U_m[Sinα\ Sinωt$$

$$+ Sin(α + 120°)\ Sin(ωt + 120°) + Sin(α + 240°)\ Sin(ωt + 240°)],$$

which indicates that a sinusoidal quantity having any phase α can be obtained by accumulating the voltages on the three windings of a three-phase transformer in appropriate proportions according to the turns.

Let

$$α_n=n*(360°/N)\ (where\ N\ is\ an\ integer\ greater\ than\ or\ equal\ 5,\ n=0,\ 1,\ 2,\ …,\ N-1),$$

(where N is an integer greater than or equal 5, n=0, 1, 2, ..., N-1),
then N sinusoidal quantities $u_n(ωt-α_n)$ are obtained.

$$u_n=U_m cos(ωt-α_n)=U_m cos[ωt - n*(360°/N)]$$

(where n=0, 1, 2, ..., N-1).

That is the N-phase AC power source, i.e., a group of N sine-wave voltage sources that have equal amplitudes and have phases at an interval of 360°/N, and are distributed in a balanced form.

Here, if $U_m Sinωt$, $U_m Sin(ωt + 120°)$ and $U_m Sin(ωt + 240°)$ are regarded as a three-phase voltage, $Sinα$, $Sin(α + 120°)$ and $Sin(α + 240°)$ are three coefficients, which correspond to the turns ratio of different windings on the three-phase transformer. If the three windings are connected in series as a winding combination, and the voltages are superimposed, a desired n-phase AC power source can be obtained on n winding combinations: a group of n sine wave voltage sources that have equal amplitudes, have phases at an interval of 360°/N and are distributed in a balanced form.

Starting from the ripple factor of the output DC voltage of a three-phase rectifier, a multi-phase bridge rectifier can be conceived, and then a multi-phase AC power source can be conceived; based a relational expression of trigonometric functions, by endowing practical physical meanings to the functions and coefficients that constitutes the relational expression, a method of generating an n-phase AC power source for a multi-phase bridge rectifier from winding combinations of a three-phase AC transformer is obtained; then, the corresponding relationship between voltage and current of primary and secondary sides of the transformer is verified, and the multi-phase bridge rectifier is confirmed, so that a DC voltage with very small ripples can be obtained directly without capacitor filtering; in addition, the current at the AC side of the transformer is a step wave that is very close to a sine wave, and only has a small amount of high-order harmonics.

The situation of a multi-phase bridge inverter is similar: A multi-phase bridge inverter circuit can be formed simply by replacing the diodes of a multi-phase bridge rectifier circuit with switch devices, ensuring that only the phase having the highest voltage among the phases of the multi-phase AC power source is connected to a positive voltage slightly higher than the maximum value, and ensuring that only the phase having the lowest voltage among the phases of the multi-phase AC power source is connected to a negative voltage slightly lower than the minimum value, thereby a multi-phase AC power source can be generated from a DC power source. Here, the process of generating a multi-phase AC power source from a multi-phase bridge inverter by means of winding combinations of a three-phase AC transformer is actually a process of generating a three-phase alternating magnetic field on the three cores of the three-phase transformer: the multi-phase AC power source is generated by superimposing the voltages induced by the alternating magnetic field on the windings in the transformer winding combinations.

In addition, here, n = 2k + 1, i.e., n is an odd number here, because: first of all, if n is an even number (n = 2k, and k is an odd number greater than 2), the ripple factor of the DC voltage obtained from the rectifier device will be the same as the ripple factor of a multi-phase rectifier device with n = k (k is an odd number greater than 2). However, the number of winding combinations and the number of rectifier diodes required for generating a multi-phase AC power source have to be doubled, which is obviously not desirable when compared with the situation where n is an odd number; as for the situation where k is an even number greater than 2, it is also not desirable when compared to the situation where n is an odd number. The situation of the multi-phase inverter is similar, i.e., the number of winding combinations and the number of unidirectional conductive switch devices have to be doubled to achieve the same effect. Therefore, in multi-phase bridge rectification, an n-phase AC power source is generated from a given AC power source by using an electromagnetic induction relationship between electrically conductive winding coils on a magnetically conductive iron core, is routed through an n-phase bridge rectifier circuit, and then directly serves as a DC voltage source having a very small ripple factor to output DC voltage and current, where n is an odd number greater than or equal to 5; in this patent, the inverter apparatus comprises an n-phase bridge inverter circuit (where n = 2k + 1, and k is an integer greater than or equal to 2) and n iron cored winding coil combinations.

To sum up, since the upper and lower envelopes of a multi-phase AC power source tend to be flat without high fluctuations when the number of phases is large enough, it is easy to realize DC-AC transformation through multi-phase rectification or multi-phase inversion by using a multi-phase AC power source as a transition means. For example, there will be no problem in DC-AC transformation as long as a small inductor and a small capacitor are connected at the DC power source side.

Here, the multi-phase bridge rectifier circuit uses diodes, while the multi-phase bridge inverter uses unidirectional conduction switch devices instead of diodes; thus, one of them is used for DC-AC transformation, while the other of them is used for AC-DC transformation, and their conducting directions are opposite to each other. If each unidirectional conductive electronic switch device is connected in parallel with a diode having a conducting direction opposite to the conducting direction of the unidirectional conductive electronic switch device, the following relationship can be established between a DC power source and an AC power source: either the AC power source supplies power to the DC power source, or the DC power source supplies power to the AC power source.

Furthermore, each unidirectional conductive electronic switch device is connected in parallel with a diode having a conducting direction opposite to the conducting direction of the unidirectional conductive electronic switch device.

Furthermore, the n-phase bridge inverter circuit is composed of n groups of unidirectional conductive electronic switch devices connected pairwise in series, and all the 2n unidirectional conductive electronic switch devices are thyristors, namely:

$VT_1+$, $VT_1-$;$VT_2+$, $VT_2-$;$VT_3+$, $VT_3-$; ...

...$VT_{n-1}+$, $VT_{n-1}-$;$VT_n+$, $VT_n-$;

The primary winding coil combinations of the three-phase AC transformer have n input and output terminals, which are connected to the series connection points of n groups of thyristors connected pairwise in series in the n-phase bridge inverter circuit, and n capacitors $C_1$, $C_2$, $C_3$, ...... $C_{n-2}$, $C_{n-1}$, $C_n$ are connected in parallel between the n connection points.

At the positive input terminal of DC voltage, the capacitor $C_1$ is charged when the thyristor $VT_1+$ is turned on; owing to the fact that the voltage of the transformer winding combination 1 is always the highest when $VT_1+$ is gated

on, $VT_1+$ bears a reverse voltage due to the voltage on the capacitor $C_1$ when $VT_2+$ is turned on; the value of the capacitor $C_1$ should ensure that $VT_1+$ is completely turned off at the end of the switching process, so that the state of the thyristors is changed from "$VT_1+$ ON" to "$VT_2+$ ON", and the state of the transformer winding combinations is changed from "combination 1 connected to the positive terminal of the power source" to "combination 2 connected to the positive terminal of the power source". At the negative voltage terminal, the switching process of the thyristors is similar. In the entire process, only 2-3 thyristors are in the ON state all the time, i.e., 3 thyristors are in the ON state at the moment of switching, and 2 thyristors are in the ON state at other times. The thyristors are turned on sequentially in a predetermined order, and the cycle is repeated, so that an n-phase AC voltage source or an n-phase step wave AC voltage source can be obtained at n connection points between the n input and output terminals of the primary winding coil combinations of the three-phase AC transformer and the n-phase bridge inverter circuit.

Furthermore, the n iron cored winding coil combinations are primary winding coil combinations of a three-phase AC transformer, and n = 3k, and k is an odd number greater than or equal to 3.

As described above, the inverter apparatus comprises an n-phase bridge inverter circuit (where n = 3k, and k is an integer greater than or equal to 3) and n iron cored winding coil combinations, which may be the primary winding coil combinations of a three-phase AC transformer. Owing to the fact that the process of generating a multi-phase AC power source by a multi-phase bridge inverter by means of the winding combinations of a three-phase AC transformer is actually a process of generating a three-phase alternating magnetic field on the three iron cores of the three-phase transformer, the three-phase windings of the secondary side of the transformer can be connected to an external three-phase AC load.

Furthermore, three secondary windings of the three-phase AC transformer are connected to an external three-phase AC load.

Furthermore, three secondary windings of the three-phase AC transformer are connected to an external three-phase AC power grid.

The n-phase bridge inverter circuit ensures that the phases of a three-phase AC voltage outputted by the three-phase AC transformer are fully consistent with the phases of the three-phase AC voltage of the power grid via a phase lock circuit.

Furthermore, the inverter apparatus and an m-phase bridge rectifier circuit jointly form a DC transformer device, wherein the secondary windings of the three-phase AC transformer are in m iron cored winding coil combinations, where m = 3i, and i is an odd number greater than or equal to 3, and the m iron cored winding coil combinations generate an m-phase AC voltage source or m m-phase step wave AC voltage sources that approximate the m m-phase AC voltage source; the m-phase AC power source refers to a group of m sine-wave voltage sources that have equal amplitudes and have initial phases at an interval of 360°/m in sequence; the m-phase step wave AC power source refers to a group of m step wave AC voltage sources that have equal fundamental wave amplitudes and have initial phases at an interval of 360°/m in sequence.

Output terminals of the m-phase AC voltage source or the m m-phase step wave AC voltage sources that approximate the m-phase AC power source are connected to an m-phase bridge rectifier circuit, which is composed of n groups of rectifier diodes connected pairwise in series; in all rectifier diodes connected pairwise in series, the cathode of one diode is connected to the anode of the other diode in each pair, each connection point between an cathode and an anode is respectively connected to a m-phase output terminal of the m-phase AC voltage source, the other cathodes of all the n groups of rectifier diodes connected pairwise in series are connected together as a positive output terminal of the n-phase bridge inverter circuit, and the other anodes of all the n groups of rectifier diodes connected pairwise in series are connected together as a negative output terminal of the n-phase bridge inverter circuit;

The m-phase bridge rectifier circuit can be directly used as a DC voltage source having a very small ripple factor without filtering, so as to output DC voltage and current and realize DC voltage transformation;

The n-phase AC power source and the m-phase AC power source only appear on the primary windings and the secondary windings of the transformer, and the alternating frequency is determined by the switching period of the inverter circuit, and the alternating frequency may be the most suitable frequency selected at will, instead of 50 Hz or 60 Hz power frequency.

A DC transformer device can be obtained by using the multi-phase bridge inverter and the multi-phase bridge rectifier, the DC transformer comprises an n-phase bridge inverter circuit (where n = 3k, and k is an integer greater than or equal to 3) and n iron cored winding coil combinations, which may be the primary winding coil combinations of a three-phase AC transformer.

Furthermore, the number of the m iron cored winding coil combinations on the secondary side of the three-phase AC transformer is equal to the number of the iron cored winding combinations on the primary side, i.e., m = n.

Furthermore, the secondary windings of the three-phase AC transformer are in n secondary iron cored winding coil combinations in one-to-one correspondence with all winding coils in the primary winding coil combinations, and the turns ratios of the primary winding coils to corresponding secondary winding coils are the same.

Furthermore, a DC power transmission and transformation network is formed from the power generation equipment to end users through power transmission lines and transformers, rectifiers and inverters to directly supply electric power to the end users in the form of direct current.

Furthermore, the secondary windings of the three-phase AC transformer are three-phase AC windings, which are connected to an external three-phase AC motor; the switching period of the unidirectional conductive electronic switch devices is adjustable, and speed regulation of the motor is realized by adjusting the switching period of the unidirectional conductive electronic switch devices.

In the inverter apparatus described above, if the secondary windings of the three-phase AC transformer are to an external three-phase AC motor, the switching period of the unidirectional conductive electronic switch devices of the multi-phase bridge inverter circuit can be adjusted, thus, speed regulation of the motor can be realized by adjusting the switching period of the unidirectional conductive electronic switch devices of the multi-phase bridge inverter circuit. Besides, the winding combinations may be the stator winding combinations of an AC motor.

If the n iron cored winding coil combinations are winding coil combinations connected end to end and evenly embedded in stator slots, and the switching period of the unidirectional conductive electronic switch devices of the multi-phase bridge inverter circuit is adjustable, the iron cored winding coils will generate a rotating magnetic field, and the motor speed can be adjusted by adjusting the switching period of the unidirectional conductive electronic switch devices of the multi-phase bridge inverter circuit.

When a three-phase AC voltage source (the initial phases are 0°, 120° and 240° respectively) is applied to the three coils of a motor stator that are arranged an included angle of 120° from each other (the included angles with respect to the X axis in the X-Y plane are $\alpha$, $\alpha+120°$ and $\alpha+240°$ respectively), a rotating magnetic field that has a constant amplitude and rotates at a constant speed will be obtained:

If each phase of AC voltage is applied to a corresponding coil, the spatial magnetic fields generated by the three coils are as follows respectively:

$$B_m\{i\cos\alpha\cos\omega t+j(\mathrm{Sin}\alpha\cos\omega t)\};$$

$$B_m\{i[\cos(\alpha+120°)\cos(\omega t+120°)]+j[\mathrm{Sin}(\alpha+120°)\cos(\omega t+120°)]\};$$

$$B_m\{i[\cos(\alpha+240°)\cos(\omega t+240°)]+j[\mathrm{Sin}(\alpha+240°)\cos(\omega t+240°)]\};$$

If the three-phase AC power source is applied to the three coils at the same time, the magnetic fields will be superimposed, wherein

$$jB_m[\mathrm{Sin}\alpha\cos\omega t+\mathrm{Sin}(\alpha+120°)\cos(\omega t+120°)$$
$$+\mathrm{Sin}(\alpha+240°)\cos(\omega t+240°)]$$
$$=(j/2)\,B_m[\mathrm{Sin}(\omega t-\alpha)+\mathrm{Sin}(\omega t+\alpha)+\mathrm{Sin}(\omega t-\alpha)+\mathrm{Sin}(\omega t+\alpha+240°)$$
$$+\mathrm{Sin}(\omega t-\alpha)+\mathrm{Sin}(\omega t+\alpha+480°)]$$
$$=j(3/2)\,B_m\,\mathrm{Sin}(\omega t-\alpha)$$

$$\text{Since } \mathrm{Sin}(\omega t+\alpha)+\mathrm{Sin}(\omega t+\alpha+240°)+\mathrm{Sin}(\omega t+\alpha+480°)=0$$
$$iB_m[\cos\alpha\cos\omega t+\cos(\alpha+120°)\cos(\omega t+120°)$$
$$+\cos(\alpha+240°)\cos(\omega t+240°)]$$
$$=(i/2)B_m[\cos(\omega t-\alpha)+\cos(\omega t+\alpha)+\cos(\omega t-\alpha)+\cos(\omega t+\alpha+240°)$$

$$+\cos(\omega t - \alpha) + \cos(\omega t + \alpha + 480°)]$$

$$= i(3/2)\, B_m \cos(\omega t - \alpha)$$

and

$$\text{and } \cos(\omega t + \alpha) + \cos(\omega t + \alpha + 240°) + \cos(\omega t + \alpha + 480°) = 0$$

A rotating magnetic field is obtained as a result of the superimposition:

$$(3/2)B_m[i\,\cos(\omega t - \alpha) + j\,\mathrm{Sin}(\omega t - \alpha)]$$

Here, when a three-phase AC voltage source (the initial phases are 0°, 120° and 240° respectively) is applied to the three coils of a motor stator that are arranged an included angle of 120° from each other (the included angles with respect to the X axis in the X-Y plane are $\alpha$, $\alpha$+120° and $\alpha$+240° respectively), a rotating magnetic field that has a constant amplitude and rotates at a constant speed will be obtained, which is the basic working principle of three-phase AC motors (including asynchronous motors and synchronous motors).

Generally speaking, when an n-phase AC voltage source (the phases are (0, $\beta$, 2$\beta$, ..., (n-2)$\beta$, (n-1)$\beta$)) is applied to n coils of the stator of the motor that are arranged at a spatial include angle $\beta$ = 360°/n with respect to each other (the included angles with respect to the X axis in the X-Y plane are ($\alpha$, $\alpha$+$\beta$, $\alpha$+2$\beta$, ..., $\alpha$+(n-2)$\beta$, $\alpha$+(n-1)$\beta$)) respectively), a rotating magnetic field that has a constant amplitude and rotates at a constant speed will be obtained:

If each phase of AC voltage is applied to a corresponding coil, the spatial magnetic fields generated by the coils are as follows respectively:

$$B_m\{i\,\cos\alpha\,\cos\omega t + j(\mathrm{Sin}\alpha\,\cos\omega t)\};$$

$$B_m\{i[\cos(\alpha + \beta)\,\cos(\omega t + \beta)] + j[\mathrm{Sin}(\alpha + \beta)\,\cos(\omega t + \beta)]\};$$

$$B_m\{i[\cos(\alpha + 2\beta)\,\cos(\omega t + 2\beta)] + j[\mathrm{Sin}(\alpha + 2\beta)\,\cos(\omega t + 2\beta)]\};$$

……

$$B_m\{i[\cos(\alpha + (n-2)\beta)\,\cos(\omega t + (n-2)\beta)]$$
$$+ j[\mathrm{Sin}(\alpha + (n-2)\beta)\,\cos(\omega t + (n-2)\beta)]\};$$

$$B_m\{i[\cos(\alpha + (n-1)\beta)\,\cos(\omega t + (n-1)\beta)]$$
$$+ j[\mathrm{Sin}(\alpha + (n-1)\beta)\,\cos(\omega t + (n-1)\beta)]\};$$

If the n-phase AC power source is applied to the n coils at the same time, the magnetic fields will be superimposed, wherein

$$iB_m\{\cos\alpha\,\cos\omega t + \cos(\alpha + \beta)\,\cos(\omega t + \beta)$$
$$+ \cos(\alpha + 2\beta)\,\cos(\omega t + 2\beta) + \ldots + \cos[\alpha + (n-2)\beta]\cos[\omega t + (n-2)\beta]$$
$$+ \cos[\alpha + (n-1)\beta]\cos[\omega t + (n-1)\beta]\};$$
$$= i(n/2)\, B_m \cos(\omega t - \alpha)$$

Since $\cos(\omega t + \alpha) + \cos(\omega t + \alpha + 2\beta) + \cos(\omega t + \alpha + 4\beta) + \ldots$

$+ \cos[\omega t + \alpha + (n - 1)\beta] + \cos s[\omega t + \alpha + (n + 1)\beta] + \cos[\omega t + \alpha + (n + 3)\beta]$

$+ \ldots + \cos[\omega t + \alpha + 2(n - 2)\beta] + \cos[\omega t + \alpha + 2(n - 1)\beta]$

$= \cos(\omega t + \alpha) + \cos(\omega t + \alpha + 2\beta) + \cos(\omega t + \alpha + 4\beta) + \ldots$

$+ \cos[\omega t + \alpha + (n - 1)\beta] + \cos(\omega t + \alpha + \beta) + \cos(\omega t + \alpha + 3\beta) + \ldots$

$+ \cos[\omega t + \alpha + (n - 4)\beta] + \cos[\omega t + \alpha + (n - 2)\beta] = 0$

$jB_m\{(\sin\alpha \cos \omega t) + \sin(\alpha + \beta) \cos(\omega t + \beta)$

$+ \sin(\alpha + 2\beta) \cos(\omega t + 2\beta) + \ldots\ldots + \sin[\alpha + (n - 2)\beta]\cos[\omega t + (n - 2)\beta]$

$+ \sin[\alpha + (n - 1)\beta]\cos[\omega t + (n - 1)\beta]\};$

$= j(n/2) B_m \sin(\omega t - \alpha)$

and

and $\sin(\omega t + \alpha) + \sin(\omega t + \alpha + 2\beta) + \sin(\omega t + \alpha + 4\beta)$

$+ \ldots + \sin[\omega t + \alpha + (n - 1)\beta] + \sin s[\omega t + \alpha + (n + 1)\beta] + \sin[\omega t + \alpha + (n + 3)\beta]$

$+ \ldots + \sin[\omega t + \alpha + 2(n - 2)\beta] + \sin[\omega t + \alpha + 2(n - 1)\beta]$

$= \sin(\omega t + \alpha) + \sin(\omega t + \alpha + 2\beta) + \sin(\omega t + \alpha + 4\beta) + \ldots$

$+ \sin[\omega t + \alpha + (n - 1)\beta] + \sin(\omega t + \alpha + \beta) + \sin(\omega t + \alpha + 3\beta)$

$+ \ldots + \sin[\omega t + \alpha + (n - 4)\beta] + \sin[\omega t + \alpha + (n - 2)\beta] = 0$

A rotating magnetic field is obtained as the result of the superimposition:

$$(n/2)B_m[i \cos(\omega t - \alpha) + j \sin(\omega t - \alpha)]$$

This rotating magnetic field is cut by n series-connected winding coils evenly embedded in the stator core of the motor, and an n-phase AC voltage source will be obtained at n series connection points. If n is large enough, a DC voltage source with very small fluctuations can be obtained from the n-phase AC voltage source via an n-phase bridge rectifier. For example, if n is an odd number greater than or equal to 9, the ripple factor of the DC power source will be smaller than 1%.

In this case, a multi-phase AC power source generated by a rotating magnetic field is transformed into direct current through multi-phase bridge rectification. On the other hand, if the diodes of the multi-phase bridge rectifier are replaced with unidirectional conductive switch devices of a multi-phase bridge inverter, a multi-phase AC power source can be obtained from the DC power source, and a rotating magnetic field can be generated on the stator core of the motor.

If the switching action time of the switch devices in the multi-phase bridge inverter is not taken into account, in the case that the n iron cored winding coil combinations are connected end to end and evenly embedded in the stator slots, the magnetic fields $B_m$ generated by these winding coils will be rectangular waves that vary alternately with time, and their directions are perpendicular to the plane of the coils. As described above, a rotating magnetic field will be obtained as a result of the superimposition of the fundamental waves of these rectangular waves:

$$(n/2)B_m[i \cos(\omega t - \alpha) + j \sin(\omega t - \alpha)]$$

Moreover, since the number of phases of the multi-phase inverter is an odd number, i.e., the number of phases n = 2k+1 (k is a positive integer), it is not difficult to prove (the specific proof is omitted) that a series of corresponding rotating magnetic fields will be obtained as a result of the superimposition of the high-order harmonics:

$$(n/2)B_{m\ harmonics}[i\ cos(\omega_{harmonics}t-\alpha_{harmonics})+j\ Sin(\omega_{harmonics}t-\alpha_{harmonics})]$$

To sum up, since the upper and lower envelopes of a multi-phase AC power source tend to be flat without high fluctuations when the number of phases is large enough, it is easy to realize DC-AC transformation through multi-phase rectification or multi-phase inversion by using a multi-phase AC power source as a transition means. For example, there will be no problem in DC-AC transformation as long as a small inductor and a small capacitor are connected at the DC power source side.

A multi-phase AC power source is associated with a rotating magnetic field. Since the above-mentioned N iron cored winding coil combinations are N winding coil combinations that are connected end to end and evenly embedded in the stator slots, a multi-phase AC power source and an associated rotating magnetic field can be generated from a DC power source through inversion; thus, the rotor can be driven to rotate, and DC power driving can be realized.

As described above, the situation of a multi-phase bridge inverter is very similar to the situation of a multi-phase bridge rectifier, except that the multi-phase bridge rectifier circuit uses diodes, while the multi-phase bridge inverter uses unidirectional conduction switch devices instead of diodes; thus, one of them is used for DC-AC transformation, and the other of them is used for AC-DC transformation, and the conducting directions of them are opposite to each other. If each unidirectional conductive electronic switch device is connected in parallel with a diode having a conducting direction opposite to the conducting direction of the unidirectional conductive electronic switch device, the following relationship can be established between a DC power source and an AC power source: either the AC power source supplies power to the DC power source, or the DC power source supplies power to the AC power source.

Therefore, a device that can realize both unidirectional bridge rectification and multi-phase bridge inversion can be obtained simply by connecting a diode having an opposite conducting direction to each unidirectional conductive electronic switch device of the n-phase bridge inverter circuit in parallel. Especially, when the motor is used as a DC drive motor, it will be able to automatically operate in an electromotor state or a generator state according to the operating condition, so as to realize electric driving or braking.

According to a second aspect of the technical scheme of the present disclosure, an application of the inverter apparatus described in any of the above aspects is provided, and the inverter apparatus is applied at a product end as a product power source or a part of the product power source.

The present disclosure attains the following beneficial effects:

Rectification and inversion are always an important topic in electrotechnics. Electrotechnics requires transformation of power sources between direct current and alternating current, but the transformation problem has not been solved well theoretically in electrotechnics. A rectifier circuit rectifies current with voltage alternating between positive values and negative values into current with unidirectional voltage, but it can't transform the current into flat direct current. Although capacitor filtering can make the voltage flat, the power factor correction that must be carried out to eliminate the high-order harmonics of the current resulted from capacitor filtering bring so many problems that it is actually impossible to carry out capacitor filtering in many cases. Inversion, which transforms direct current into alternating current, is actually more complicated and brings more problems.

Various problems encountered in rectification and inversion are solved perfectly by introducing the concept of multi-phase AC power source and performing DC-AC transformation through multi-phase bridge rectification and multi-phase bridge inversion. Thus, AC-DC transformation is realized very conveniently. In that way, in rectification, the DC power source routed through the multi-phase bridge rectifier circuit is only electrically related with the flat upper and lower envelope voltages of the multi-phase AC power source, and only a very small ripple factor (e.g., smaller than 1%) has to be dealt with for AC-DC transformation, and the three-phase AC current at the AC side is a step wave that is very close to a sine wave; on the other hand, the situation of DC-AC inversion is similar. The DC side and the AC side are directly connected through the multi-phase inverter circuit, the DC power source is only electrically related with the flat upper and lower envelope voltages of the multi-phase AC power source, and only a very small deviation has to be dealt with. The problem can be solved perfectly if the DC side is connected with a small inductor and a smaller capacitor.

In addition to supplying power to an external three-phase AC load or an external three-phase AC power grid, the apparatus in the present disclosure can work with a multi-phase bridge rectifier circuit to form a DC transformer; the multi-phase bridge rectifier circuit can directly serve as a DC voltage source with a very small ripple factor without filtering, and output DC voltage and current, so as to realize DC transformation. Here, the AC power source only appears on the primary and secondary windings of the transformer, only inside the transformer, and the other power transmission and power supply devices are DC ones; thus, the impacts of AC signals on the environment are eliminated radically.

In the present disclosure, a multi-phase bridge inversion method is employed to generate a multi-phase AC power source and form a rotating magnetic field, so as to realize DC power driving. This is a novel DC drive motor, in which not only the diodes are replaced with electronic switch devices, but also the working principles of DC motor and diode are fully abandoned. Thus, the structure of the DC drive motor is greatly simplified, and the motor speed is regulatable; in addition, in the process of speed regulation, driving or braking can be realized by automatically switching the motor between an electromotor state and a generator state. In that way, the kinetic energy consumed in the braking process will not lead to harmful heating, but will be converted into useful electric energy.

**Brief Description of the Drawings**

In order to explain the technical scheme of the present disclosure more clearly, the accompanying drawings to be used herein will be briefly introduced below. Apparently, the accompanying drawings in the following description only illustrate some embodiments of the present disclosure. Those having ordinary skills in the art can obtain other drawings on the basis of those accompanying drawings without expending any creative labor.

Fig. 1 shows the case in which n winding combinations are connected in a star connection mode;

Fig. 2 shows the voltage waveform of a 9-phase AC power source applied to 9 primary winding combinations of a transformer;

Fig. 3 shows the corresponding relationship of magnetic potentials generated by the currents in primary and secondary windings on three cores of a three-phase transformer;

Fig. 4 is a block diagram of a DC electric drive device formed by connecting winding coil combinations evenly embedded in stator slots with unidirectional conductive electronic switch devices of a multi-phase bridge inverter circuit;

Fig. 5 is a schematic block diagram of a 9-phase bridge inverter that uses thyristors as electronic switches; and

Fig. 6 is a block diagram of a DC transformer device.

**Detailed Description of Embodiments**

Specific embodiments will be discussed below in several examples.

Example 1:

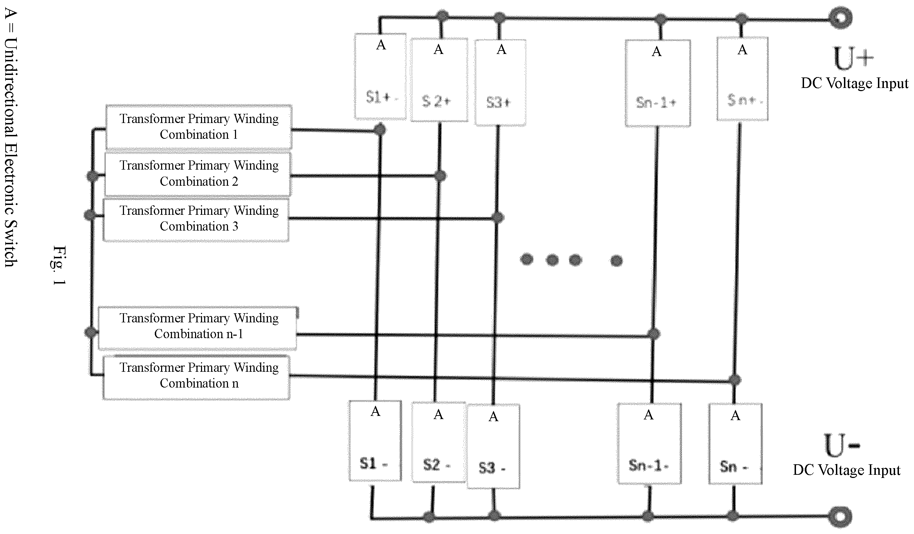

This example is a specific embodiment of a 9-phase bridge inverter circuit via which the secondary windings of a 3-phase transformer are connected to a 3-phase AC power grid.
A block diagram of an n-phase bridge inverter circuit is shown in Fig. 1, where n=9.
The turns of the primary windings of the three-phase AC transformer are in 5 different numbers, and the turn ratio is: $N1 : N2 : N3 : N4 : N5 = Sin90° : Sin50° : Sin10° : Sin30° : Sin70°$.
The five numbers of turns, plus positive and negative polarities, are linked in tandem in groups of three to form all required nine transformer primary winding combinations, which are:

Transformer secondary winding combination 1:
phase A N1 turns, phase B -N4 turns, and phase C -N4 turns;
Transformer secondary winding combination 2:
phase A N2 turns, phase B N3 turns, and phase C -N5 turns;
Transformer secondary winding combination 3:
phase A N3 turns, phase B N2 turns, and phase C -N5 turns;
Transformer secondary winding combination 4:
phase A -N4 turns, phase B N1 turns, and phase C -N4 turns;
Transformer secondary winding combination 5:
phase A -N5 turns, phase B N2 turns, and phase C N3 turns;
Transformer secondary winding combination 6:
phase A -N5 turns, phase B N3 turns, and phase C N2 turns;
Transformer secondary winding combination 7:
phase A -N4 turns, phase B -N4 turns, and phase C N1 turns;
Transformer secondary winding combination 8:

phase A N3 turns, phase B -N5 turns, and phase C N2 turns;
Transformer secondary winding combination 9:
phase A N2 turns, phase B -N5 turns, and phase C N3 turns .

Fig. 1 shows the case in which the n winding combinations are connected in a star connection mode.

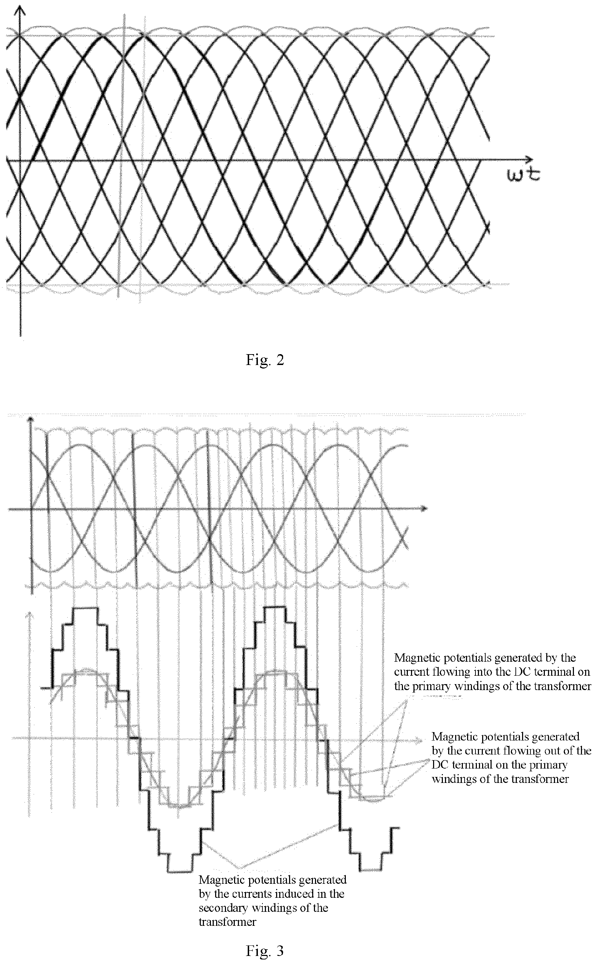

Fig. 2 shows the voltage waveform of a 9-phase AC power source applied to 9 primary winding combinations of a transformer.
Fig. 3 shows the corresponding relationship of magnetic potentials generated by the currents in primary and secondary windings on three cores of a three-phase transformer. (The power factor of the load on the secondary side of the transformer is 1.0 after power factor compensation.)

Example 2:

Another specific implementation is discussed below in an example of a DC electric drive device composed of winding coil combinations evenly embedded in stator slots and a multi-phase bridge inverter circuit.

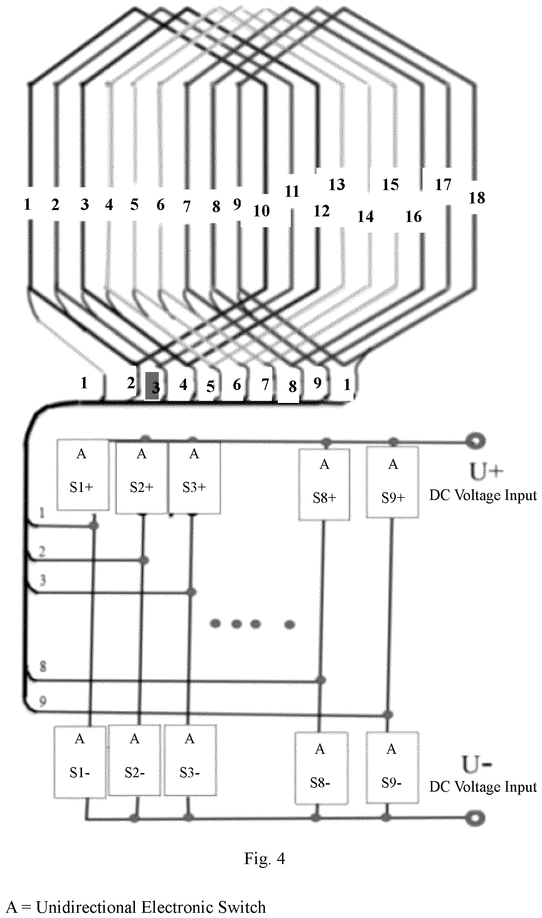

Fig. 4 is a block diagram of a DC electric drive device formed by connecting winding coil combinations evenly embedded in stator slots with unidirectional conductive electronic switch devices of a multi-phase bridge inverter circuit.

Example 3:

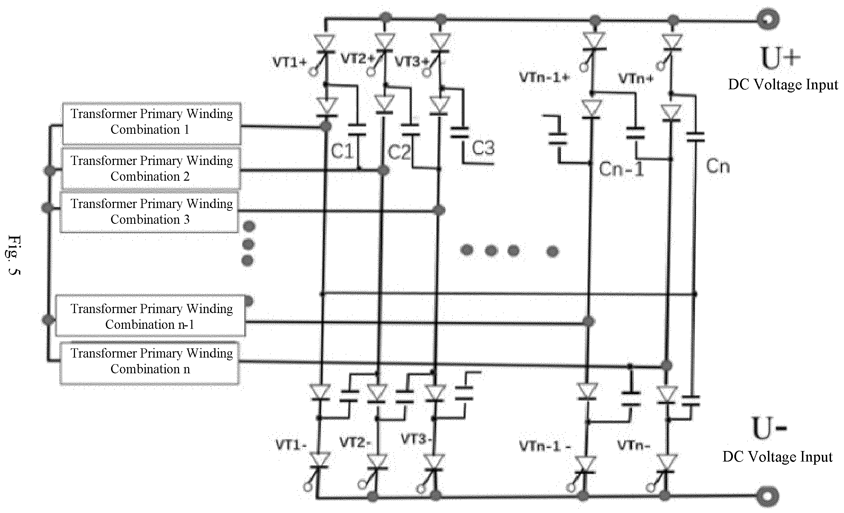

Fig. 5 is a schematic block diagram of a multi-phase bridge inverter that uses thyristors as electronic switches.
At the positive input terminal of DC voltage, the capacitor $C_1$ is charged when the thyristor $VT_1+$ is turned on; owing to the fact that the voltage of the transformer winding combination 1 is always the highest when $VT_1+$ is gated on, $VT_1+$ bears a reverse voltage due to the voltage on the capacitor $C_1$ when $VT_2+$ is turned on; the value of the capacitor $C_1$ should ensure that $VT_1+$ is completely turned off, so that the state of the thyristors is changed from "$VT_1+$ ON" to "$VT_2+$ ON", and the state of the transformer winding combinations is changed from "combination 1 connected to the positive terminal of the power source" to "combination 2 connected to the positive terminal of the power source". At the negative voltage terminal, the switching process of thyristors is similar, and only 2-3 thyristors are in the ON state in the entire process, i.e., three thyristors are in the ON state at the moment of switching, while two thyristors are in the ON state at other times. The thyristors are turned on in the following sequence:

$(VT_1+, VT_5-)(VT_1+, VT_2+, VT_5-)(VT_2+, VT_5-)(VT_2+, VT_5-, VT_6-)$

$(VT_2+, VT_6-)(VT_2+, VT_3+, VT_6-)(VT_3+, VT_6-)(VT_3+, VT_6-, VT_7-)$

$(VT_3+, VT_7-)(VT_3+, VT_4+, VT_7-)(VT_4+, VT_7-)(VT_4+, VT_7-, VT_8-)$

$(VT_4+, VT_8-)(VT_4+, VT_5+, VT_8-)(VT_5+, VT_8-)(VT_5+, VT_8-, VT_9-)$

$(VT_5+, VT_9-)(VT_5+, VT_6+, VT_9-)(VT_6+, VT_9-)(VT_6+, VT_9-, VT_1-)$

$(VT_6+, VT_1-)(VT_6+, VT_7+, VT_1-)(VT_7+, VT_1-)(VT_7+, VT_1-, VT_2-)$

$(VT_7+, VT_2-)(VT_7+, VT_8+, VT_2-)(VT_8+, VT_1-)(VT_8+, VT_2-, VT_3-)$

$(VT_8+, VT_3-)(VT_8+, VT_9+, VT_3-)(VT_9+, VT_2-)(VT_9+, VT_3-, VT_4-)$

$(VT_9+, VT_4-)(VT_9+, VT_1+, VT_4-)(VT_1+, VT_3-)(VT_1+, VT_4-, VT_5-)$

......

The cycle is repeated.
$(VT_1+, VT_5-)(VT_1+, VT_2+, VT_5-)(VT_2+, VT_4-)(VT_2+, VT_5-, VT_6-)$
......

The thyristors are turned on sequentially in that sequence, and the cycle is repeated, so that an 8-phase AC voltage source or a 9-phase step wave AC voltage source can be obtained at 9 connection points between the 9 input and output terminals of the primary winding coil combinations of the three-phase AC voltage transformer and the 9-phase bridge inverter circuit.

Example 4:

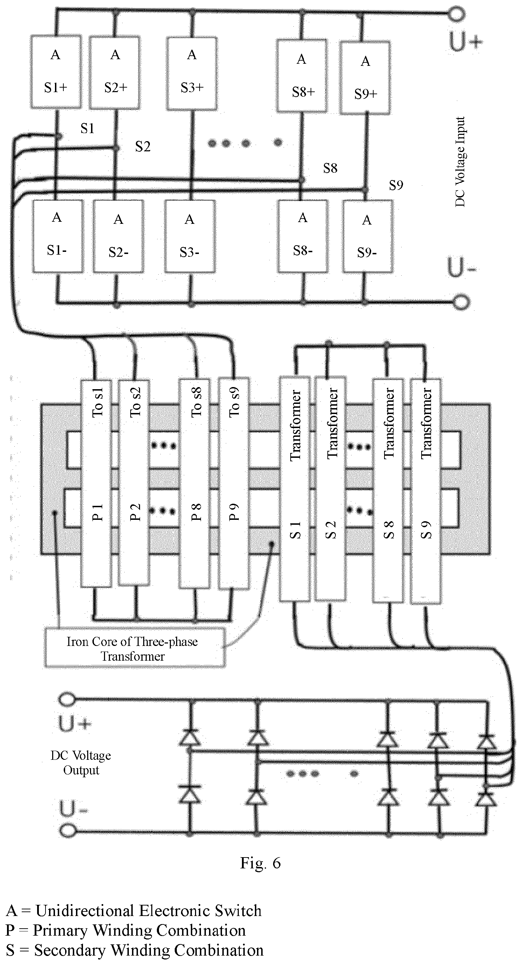

The device in this example is a DC transformer device, and a block diagram of the principle of this device is shown in Fig. 6.

The secondary windings of the three-phase AC transformer are in n secondary iron cored winding coil combinations in one-to-one correspondence with all winding coils in n primary winding coil combinations, and the turns ratios of the primary winding coils to corresponding secondary winding coils are the same.

The turns of the primary windings of the three-phase transformer are in 5 different numbers, and the turn ratio is: $N1_{primary} : N2_{primary} : N3_{primary} : N4_{primary} : N5_{primary}$ = Sin90° : Sin50° : Sin10° : Sin30° : Sin70°.

The five numbers of turns, plus positive and negative polarities, are linked in tandem in groups of three to form all required nine transformer primary winding combinations, which are:

Transformer secondary winding combination 1:
phase A N1 turns, phase B -N4 turns, and phase C -N4 turns;
Transformer secondary winding combination 2:
phase A N2 turns, phase B N3 turns, and phase C -N5 turns;
Transformer secondary winding combination 3:
phase A N3 turns, phase B N2 turns, and phase C -N5 turns;
Transformer secondary winding combination 4:
phase A -N4 turns, phase B N1 turns, and phase C -N4 turns;
Transformer secondary winding combination 5:
phase A -N5 turns, phase B N2 turns, and phase C N3 turns;
Transformer secondary winding combination 6:
phase A -N5 turns, phase B N3 turns, and phase C N2 turns;
Transformer secondary winding combination 7:
phase A -N4 turns, phase B -N4 turns, and phase C N1 turns;
Transformer secondary winding combination 8:
phase A N3 turns, phase B -N5 turns, and phase C N2 turns;
Transformer secondary winding combination 9:
phase A N2 turns, phase B -N5 turns, and phase C N3 turns .

The turns of the secondary windings of the three-phase transformer are also in 5 different numbers, and the turn ratio is:
$N1_{secondary}:N2_{secondary}:N3_{secondary}:N4_{secondary}:N5_{secondary}$= Sin90°:Sin50°:Sin10°:Sin30°:Sin70°.

However, the numbers of turns of the secondary windings are increased (in the case of voltage boost) or decreased (in the case of voltage step-down) by k times from the numbers of turns of corresponding primary windings.

The windings having five numbers of turns, plus positive and negative polarities, are linked in tandem in groups of three to form all required nine transformer secondary winding combinations, which are:

Transformer secondary winding combination 1:
phase A kN1 turns, phase B -kN4 turns, and phase C -kN4 turns;
Transformer secondary winding combination 2:
phase A kN2 turns, phase B kN3 turns, and phase C -kN5 turns;
Transformer secondary winding combination 3:
phase A kN3 turns, phase B kN2 turns, and phase C -kN5 turns;
Transformer secondary winding combination 4:
phase A -kN4 turns, phase B kN1 turns, and phase C -kN4 turns;
Transformer secondary winding combination 5:
phase A -kN5 turns, phase B kN2 turns, and phase C kN3 turns;
Transformer secondary winding combination 6:
phase A -kN5 turns, phase B kN3 turns, and phase C kN2 turns;
Transformer secondary winding combination 7:
phase A -kN4 turns, phase B -kN4 turns, and phase C kN1 turns;
Transformer secondary winding combination 8:
phase A kN3 turns, phase B -kN5 turns, and phase C kN2 turns;
Transformer secondary winding combination 9:
phase A kN2 turns, phase B -kN5 turns, and phase C kN3 turns.

The windings having five numbers of turns, plus positive and negative polarities, are connected in tandem in groups of three to form all required nine transformer secondary winding combinations.

Finally, a DC voltage is output through a multi-phase bridge rectifier, thereby DC voltage transformation is realized.

By using the above DC voltage transformation apparatus, a DC power transmission and transformation network can be formed from the power generation equipment to end users through power lines and transformers, rectifier and inverters repeatedly, so as to directly supply power to the end users in the form of direct current.

While some embodiments of the present disclosure are described above with reference to the accompanying drawings, the present disclosure is not limited to those embodiments. The embodiments described above are only illustrative rather than limiting. Various modifications and alternations may be made by those having ordinary skills in the art inspired by the present disclosure without departing from the spirit of the present disclosure and the scope of protection defined by the claims. However, all of such modifications and alternations shall be deemed as falling in the scope of protection of the present disclosure.

**Claims**

1. An inverter apparatus, wherein, comprising an n-phase bridge inverter circuit and n iron cored winding coil combinations, where $n = 2k + 1$, and $k$ is an integer greater than or equal to 2;

   the n-phase bridge inverter circuit is composed of n groups of unidirectional conductive electronic switch devices connected pairwise in series, including 2n unidirectional conductive electronic switch devices in total, namely: $S_1+$, $S_1-$, $S_2+$, $S_2-$; $S_3+$, $S_3-$; ...; $S_{n-1}+$, $S_{n-1}-$; $S_n+$, $S_n-$;
   both of the two unidirectional conductive electronic switch devices connected pairwise in series are connected to a positive pole of a DC power source at one end, and connected to a negative pole of the DC power source at the other end; at any time, at most one of the two unidirectional conductive electronic switch devices connected pairwise in series is in an ON state, so that the potential at a series connection point can be either a positive pole potential or a negative pole potential of the DC power source, or can be in a high-impedance state, i.e., when both of the two unidirectional conductive electronic switch devices are in an OFF state, the potential can be any value determined by other factors;
   the n iron cored winding coil combinations employ a star connection mode, i.e., the n iron cored winding coil combinations are connected together at one end, and connected to the connection points of the n unidirectional conductive electronic switch devices connected pairwise in series in the n-phase bridge inverter circuit at the other end; alternatively, the n iron cored winding coil combinations employ a polygonal connection mode, i.e., the n iron cored winding coil combinations are connected end to end in a specific order to form a closed loop, and n connection points in the polygonal connection mode are connected to the series connection points of the n groups of unidirectional conductive electronic switch devices connected pairwise in series in the n-phase bridge inverter circuit;
   the 2n unidirectional conductive electronic switch devices perform switching actions according to a pre-determined switching sequence: if the action time of the switches is not taken into account, then, in each action, one switch is closed, while another switch is opened at the same time, to ensure that a pair of switches are always connected; if the action time of the switches is taken into account, then, at any moment, two or three unidirectional conductive electronic switch devices among the 2n unidirectional conductive electronic switch devices are in an ON state, i.e., at a switching moment of the unidirectional conductive electronic switch devices, the unidirectional conductive electronic switch devices that are being switched on and the unidirectional conductive electronic switch devices that are being switched off are in an ON state simultaneously; at that point, the switching-on sequence of the unidirectional conductive electronic switch devices is as follows:

   $(S_1+, S_{k+1}-)$, $(S_1+, S_2+, S_{k+1}-)$, $(S_2+, S_{k+1}-)$, $(S_2+, S_{k+1}-, S_{k+2}-)$, $(S_2+, S_{k+2}-)$,
   $(S_2+, S_3+, S_{k+2}-)$, $(S_3+, S_{k+2}-)$, $(S_3+, S_{k+2}-, S_{k+3}-)$, $(S_3+, S_{k+3}-)$,
   ...
   $(S_{2k}+, S_{k-1}-, S_{kk}-)$, $(S_{2kk}+, S_k-)$, $(S_{2k}+, S_{2k+1}+, S_k-)$, $(S_{2k+1}+, S_k-)$,
   $(S_{2k+1}+, S_{kkk}-, S_{k+1}-)$, $(S_{2k+1}+, S_{k+1}-)$, $(S_{2k+1}+, S_1+, S_{k+1}-)$,

   the cycle is repeated $\rightarrow (S_1+, S_{k+1}-)$ ......
   there is a definite electromagnetic induction relationship between the iron cored winding coils, so that a given DC power source generates an n-phase AC voltage source at n connection points of the n iron cored winding coil combinations and n series connection points of the n groups of unidirectional conductive electronic switch devices connected pairwise in series in the n-phase bridge inverter circuit, or generates n n-phase step wave AC voltage sources that approximate the n-phase AC power source;

the n-phase AC voltage source comprises n sine wave voltage sources, which have equal amplitudes and have phases at an interval of 360°/n in sequence; the n-phase step wave AC voltage source comprises n step wave AC voltage sources, which have equal amplitudes and have fundamental wave phases at an interval of 360°/n in sequence.

2. The inverter apparatus of claim 1, wherein each unidirectional conductive electronic switch device is connected in parallel with a diode having a conducting direction opposite to the conducting direction of the unidirectional conductive electronic switch device.

3. The inverter apparatus of claim 1 or 2, wherein each unidirectional conductive electronic switch device is a thyristor; the n iron cored winding coil combinations have n input and output terminals, which are connected to series connection points of n groups of thyristors connected pairwise in series in the n-phase bridge inverter circuit, and n capacitors are connected in parallel between the n connection points, so that an n-phase AC voltage source or an n-phase step wave AC voltage source is obtained at the n connection points.

4. The inverter apparatus of claim 1, wherein the n iron cored winding coil combinations are primary winding coil combinations of a three-phase AC transformer, and n = 3k, and k is an odd number greater than or equal to 3.

5. The inverter apparatus of claim 4, wherein three secondary windings of the three-phase AC transformer are connected to an external three-phase AC load.

6. The inverter apparatus of claim 4, wherein the three secondary windings of the three-phase AC transformer are connected to an external three-phase AC power grid; and
the n-phase bridge inverter circuit ensures that the phases of a three-phase AC voltage outputted by the three-phase AC transformer is fully consistent with the phases of the three-phase AC voltage of the power grid via a phase lock circuit.

7. The inverter apparatus of claim 4, wherein the inverter apparatus and an m-phase bridge rectifier circuit jointly form a DC transformer device,

wherein the secondary windings of the three-phase AC transformer are in m iron cored winding coil combinations, where m = 3i, and i is an odd number greater than or equal to 3, and the m iron cored winding coil combinations generate an m-phase AC voltage source or m m-phase step wave AC voltage sources that approximate the m m-phase AC voltage source; the m-phase AC voltage source comprises m sine wave voltage sources, which have equal amplitudes and have phases at an interval of 360°/m in sequence; the m-phase step wave AC voltage source comprises m step wave AC voltage sources, which have equal fundamental wave amplitudes and phases at an interval of 360°/m in sequence;
output terminals of the m-phase AC voltage source or the m m-phase step wave AC voltage sources that approximate the m-phase AC power source are connected to an m-phase bridge rectifier circuit, which is composed of n groups of rectifier diodes connected pairwise in series; in all rectifier diodes connected pairwise in series, the cathode of one diode is connected to the anode of the other diode in each pair, each connection point between an cathode and an anode is respectively connected to a m-phase output terminal of the m-phase AC voltage source, the other cathodes of all the n groups of rectifier diodes connected pairwise in series are connected together as a positive output terminal of the n-phase bridge inverter circuit, and the other anodes of all the n groups of rectifier diodes connected pairwise in series are connected together as a negative output terminal of the n-phase bridge inverter circuit;
the n-phase bridge inverter circuit can be used as a DC voltage source to output DC voltage and current, so as to realize DC voltage transformation;
the n-phase AC power source and the m-phase AC power source appear only on the primary windings and the secondary windings of the transformer, and the alternating frequency is determined by the switching period of the switch devices in the inverter circuit.

8. The inverter apparatus of claim 7, wherein the number of the m iron cored winding coil combinations on the secondary side of the three-phase AC transformer is equal to the number of the iron cored winding combinations on the primary side, i.e., m = n.

9. The inverter apparatus of claim 7 or 8, wherein the secondary windings of the three-phase AC transformer are in n secondary iron cored winding coil combinations in one-to-one correspondence with all winding coils in the primary winding coil combinations, and the turns ratios of the primary winding coils to corresponding secondary winding coils are the same.

10. The inverter apparatus of claim 9, wherein a DC power transmission and transformation network is formed from the power generation equipment to end users through power transmission lines and transformers, rectifiers and inverters to directly supply electric power to the end users in the form of direct current.

11. The inverter apparatus of claim 4, wherein the secondary windings of the three-phase AC transformer are three-phase AC windings, which are connected to an external three-phase AC motor; the switching period of the unidirectional conductive electronic switch devices is adjustable, and speed regulation of the motor is realized by adjusting the switching period of the unidirectional conductive electronic switch devices.

12. The inverter apparatus of claim 1 or 2, wherein the n iron cored winding coil combinations are combinations of winding coils that are connected end to end and embedded in stator slots of a motor; the switching period of the unidirectional conductive electronic switch devices is adjustable, and speed regulation of the motor is realized by adjusting the switching period of the unidirectional conductive electronic switch devices.

13. The inverter apparatus of claim 12, wherein k is an integer greater than or equal to 3.

14. An application of the inverter apparatus of any of claims 1-13, wherein the inverter apparatus is applied to a product end as a product power source of a part of the product power source.

Fig. 1

A = Unidirectional Electronic Switch

Fig. 2

Magnetic potentials generated by the
current flowing into the DC terminal on
the primary windings of the transformer

Magnetic potentials generated
by the current flowing out of the
DC terminal on the primary
windings of the transformer

Magnetic potentials generated
by the currents induced in the
secondary windings of the
transformer

Fig. 3

Fig. 4

A = Unidirectional Electronic Switch

Fig. 5

Fig. 6

A = Unidirectional Electronic Switch
P = Primary Winding Combination
S = Secondary Winding Combination

## INTERNATIONAL SEARCH REPORT

| | International application No. |
|---|---|
| | **PCT/CN2022/125429** |

**A. CLASSIFICATION OF SUBJECT MATTER**

H02M 7/515(2007.01)i; H02M 7/64(2006.01)i; H02P 7/06(2006.01)i

According to International Patent Classification (IPC) or to both national classification and IPC

**B. FIELDS SEARCHED**

Minimum documentation searched (classification system followed by classification symbols)

H02M; H02P

Documentation searched other than minimum documentation to the extent that such documents are included in the fields searched

Electronic data base consulted during the international search (name of data base and, where practicable, search terms used)

CNABS, CNTXT, EXTXT, ENTXTC, DWPI, CNKI, IEEE: 逆变, 多相, 五相, 移相, 相移, 交错, 正弦, 梯, 脉波, 合成, 变压器, 绕组, 线圈, 损耗, invert+, plural+, multi+, phase+, shift+, interleav+, transformer+, coil+, winding+

**C. DOCUMENTS CONSIDERED TO BE RELEVANT**

| Category* | Citation of document, with indication, where appropriate, of the relevant passages | Relevant to claim No. |
|---|---|---|
| Y | CN 1787345 A (LI HUIMIN) 14 June 2006 (2006-06-14) <br> description, pages 1-5, and figures 9-18 | 1-14 |
| Y | CN 1117663 A (WANG DONGKUI) 28 February 1996 (1996-02-28) <br> description, pages 1-10, and figures 1-3D | 1-14 |
| PA | CN 114553026 A (ZHANG YIXING) 27 May 2022 (2022-05-27) <br> entire document | 1-14 |
| A | CN 111786580 A (HARBIN INSTITUTE OF TECHNOLOGY, WEIHAI) 16 October 2020 (2020-10-16) <br> entire document | 1-14 |
| A | CN 107947619 A (BEIJING JIAOTONG UNIVERSITY) 20 April 2018 (2018-04-20) <br> entire document | 1-14 |
| A | JP 2013021825 A (JAPAN RADIO CO., LTD. et al.) 31 January 2013 (2013-01-31) <br> entire document | 1-14 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **21 November 2022** | **11 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/125429**

| Patent document cited in search report | | | Publication date (day/month/year) | Patent family member(s) | | | Publication date (day/month/year) |
|---|---|---|---|---|---|---|---|
| CN | 1787345 | A | 14 June 2006 | WO | 2007054909 | A2 | 18 May 2007 |
| | | | | CN | 1787345 | B | 30 March 2011 |
| | | | | WO | 2007054909 | A3 | 18 October 2007 |
| CN | 1117663 | A | 28 February 1996 | CN | 1106174 | A | 02 August 1995 |
| CN | 114553026 | A | 27 May 2022 | None | | | |
| CN | 111786580 | A | 16 October 2020 | CN | 111786580 | B | 19 July 2022 |
| CN | 107947619 | A | 20 April 2018 | None | | | |
| JP | 2013021825 | A | 31 January 2013 | None | | | |

Form PCT/ISA/210 (patent family annex) (January 2015)